(19) **Europäisches Patentamt / European Patent Office / Office européen des brevets**

(11) **EP 2 956 423 B1**

(12) # FASCICULE DE BREVET EUROPEEN

(45) Date de publication et mention
de la délivrance du brevet:
**04.09.2019 Bulletin 2019/36**

(21) Numéro de dépôt: **14708625.0**

(22) Date de dépôt: **12.02.2014**

(51) Int Cl.:
***C03C 23/00*** (2006.01)

(86) Numéro de dépôt international:
**PCT/FR2014/050272**

(87) Numéro de publication internationale:
**WO 2014/125211 (21.08.2014 Gazette 2014/34)**

(54) **PROCEDE DE TRAITEMENT PAR UN FAISCEAU D'IONS POUR PRODUIRE DES MATÉRIAUX EN VERRE ANTIREFLET DURABLE**

IONENSTRAHLBEHANDLUNGSVERFAHREN ZUR HERSTELLUNG VON DAUERHAFTEN GLASMATERIALIEN MIT REFLEXIONSSCHUTZ

ION BEAM TREATMENT METHOD FOR PRODUCING DURABLE ANTI-REFLECTIVE GLASS MATERIALS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **15.02.2013 FR 1300336**

(43) Date de publication de la demande:
**23.12.2015 Bulletin 2015/52**

(73) Titulaire: **Ionics France
14200 Hérouville-Saint-Clair (FR)**

(72) Inventeurs:
- **BUSARDO, Denis
F-14510 Gonneville-sur-Mer (FR)**
- **GUERNALEC, Frederic
F-35345 Liffre (FR)**

(74) Mandataire: **Cabinet Plasseraud
66, rue de la Chaussée d'Antin
75440 Paris Cedex 09 (FR)**

(56) Documents cités:
| | |
|---|---|
| WO-A2-2012/001325 | DD-A1- 214 369 |
| FR-A1- 2 962 135 | FR-A7- 2 334 278 |
| JP-A- H06 100 334 | US-A- 5 250 098 |
| US-A- 5 965 629 | |

- GEOTTI-BIANCHINI F ET AL: "ANTIREFLECTIVE EFFECTS ON A SODA-LIME GLASS INDUCED BY AR+ IMPLANTATION", JOURNAL OF THE AMERICAN CERAMIC SOCIETY, BLACKWELL PUBLISHING, MALDEN, MA, US, vol. 67, no. 1, 1 janvier 1984 (1984-01-01), pages 39-42, XP001221678, ISSN: 0002-7820
- MAZZOLDI P: "PROPERTIES OF ION IMPLANTED GLASSES", NUCLEAR INSTRUMENTS & METHODS IN PHYSICS RESEARCH, NORTH-HOLLAND PUBLISHING COMPANY. AMSTERDAM, NL, vol. 209/210, no. PART 02, 1 mai 1983 (1983-05-01), pages 1089-1098, XP001221677, ISSN: 0167-5087, DOI: 10.1016/0167-5087(83)90924-9
- WEBB A P ET AL: "REFRACTIVE INDEX PROFILES INDUCED BY ION IMPLANTATION INTO SILICA", JOURNAL OF PHYSICS D. APPLIED PHYSICS, IOP PUBLISHING, BRISTOL, GB, vol. 9, no. 9, 1 janvier 1976 (1976-01-01), pages 1343-1354, XP001221672, ISSN: 0022-3727, DOI: 10.1088/0022-3727/9/9/011
- POLATO P ET AL: "CHARACTERIZATION BY NUCLEAR AND SPECTROPHOTOMETRIC ANALYSIS OF NEAR-SURFACE MODIFICATIONS OF GLASS IMPLANTED WITH HEAVY IONS", JOURNAL OF THE AMERICAN CERAMIC SOCIETY, BLACKWELL PUBLISHING, MALDEN, MA, US, vol. 70, no. 10, 1 octobre 1987 (1987-10-01), pages 775-779, XP001221681, ISSN: 0002-7820, DOI: 10.1111/J.1151-2916.1987.TB04878.X

EP 2 956 423 B1

**(Cont. page suivante)**

- **BATTAGLIN G ET AL: "Ion implantation effects in heavy metal fluoride glasses", JOURNAL OF NON-CRYSTALLINE SOLIDS, NORTH-HOLLAND PHYSICS PUBLISHING. AMSTERDAM, NL, vol. 120, no. 1-3, 1 avril 1990 (1990-04-01), pages 256-261, XP024063441, ISSN: 0022-3093, DOI: 10.1016/0022-3093(90)90210-D [extrait le 1990-04-01]**
- **MAZZOLDI ET AL: "Ion beam modification of glass surface properties", JOURNAL OF NON-CRYSTALLINE SOLIDS, NORTH-HOLLAND PHYSICS PUBLISHING. AMSTERDAM, NL, vol. 120, no. 1-3, 1 avril 1990 (1990-04-01), pages 223-233, XP024063437, ISSN: 0022-3093, DOI: 10.1016/0022-3093(90)90206-2 [extrait le 1990-04-01]**

Remarques:
Le dossier contient des informations techniques présentées postérieurement au dépôt de la demande et ne figurant pas dans le présent fascicule.

Remarques:

**Description**

L'invention a pour objet un procédé de traitement d'un matériau en verre par un faisceau d'ions d'un gaz mono et multichargés; ce procédé vise à réduire la réflexion et à améliorer la transmission de la lumière dans le spectre des longueurs d'onde du domaine visible sur une longue durée. Le procédé de l'invention s'applique notamment sur la surface d'un substrat transparent d'une lentille ou d'un verre en feuille de manière à ce que ladite surface acquière des propriétés antireflets caractérisées par une transmission de la lumière visible supérieure à 98%. Dans ces conditions la surface présente de bonnes propriétés antireflets dans le domaine visible.

Il est bien connu qu'une surface en verre réfléchit environ pas 95,5% mais 4,5% de la lumière incidente, réduisant de fait l'efficacité énergétique d'une cellule photovoltaïque ou rendant difficile la lecture d'un écran plat d'ordinateur ou de téléphone mobile.

Cette réflexion de la lumière sur une surface en verre s'explique plus généralement par les relations de Fresnel qui donnent pour un rayon lumineux traversant un dioptre sous un angle d'incidence de 90°, les coefficients de réflexion (R) et de transmission (T) suivants :

$$R = ((n2-n1)/(n2+n1))^2 \; ; \; T = 4 \; n1*n2/(n2+n1)^2$$

Ou n1 et n2 sont les indices de réflexion des milieux séparés par le dioptre.

On constate que R+T = 1 (conservation de l'énergie)

Pour de l'air (n1= 1) et du verre (n2 = 1,54) on obtient avec ces formules, R = 0,045, T = 1-R = 0,955 (seulement 4,5% est réfléchi alors que 95,5% est transmis).

Pour une lame de verre constituée de deux faces, on a une perte qui est deux fois supérieure, 2 x 4,5% = 9%. Cette perte d'énergie lumineuse représente un part non négligeable pour une application photovoltaïque.

Il existe des procédés antireflets consistant en des dépôts à base d'oxyde métallique dont la mise en oeuvre est relativement complexe et coûteuse. Par exemple pour des lentilles, on citera le procédé consistant à déposer sous vide ($10^{-5}$ torr) des couches minces d'oxydes métalliques avec une précision de l'ordre de l'angström. Dans des enceintes hors poussières les lentilles sont d'abord nettoyées dans des chaînes de lavage puis séchées aux ultrasons. Elles sont montées dans des supports qui entreront dans des cloches de traitement. Le vide est fait dans les cloches afin d'obtenir l'évaporation (sublimation) de l'oxyde à moins haute température. L'évaporation peut se faire par effet joule en chauffant l'oxyde ou à l'aide d'un canon à électrons. Il faut parfaitement contrôler la qualité et la mesure du vide, la vitesse d'évaporation et les épaisseurs de couches déposées. Ces épaisseurs doivent bien sûr être uniformes. Il existe d'autres types de dépôts PVD moins coûteux comme le fluorure de magnésium MgF2 (indice 1,38) et la cryolite Na3AlF6 (indice 1,35) dont les indices de réfraction se rapprochent de l'indice idéal sans toutefois l'atteindre comme peut le permettre le procédé de l'invention.

On entend par « verre» un matériau ou un alliage dur, fragile (cassant) et transparent à la lumière visible. Le plus souvent, le verre est constitué d'oxyde de silicium (silice $SiO_2$) et de fondants, le constituant principal étant du sable. Parmi tous les types de verre, le plus courant est le verre sodocalcique. Du point de vue physique, le verre est un matériau amorphe (c'est-à-dire non cristallin) présentant le phénomène de transition vitreuse.

En dessous de sa température de transition, qui peut être très élevée, le verre se présente à l'état vitreux.

Il en résulte un besoin de méthode de traitement de surface de matériaux en verre pour apporter des propriétés antireflet sur une très longue durée, de préférence selon des méthodes facilement industrialisables, de manière à pouvoir offrir de tels matériaux en verres en quantité significative et à des coûts raisonnables.

Le document US 5,250,098 divulgue un procédé de traitement antireflet durable dans le domaine visible d'un matériau en verre consistant en un bombardement par faisceau d'ions ; les ions utilisés sont mono chargés.

L'invention a pour but d'offrir une méthode traitement de matériau en verre peu onéreuse et permettant de traiter des surfaces répondant aux besoins de nombreuses applications. Parmi ces applications on citera : les écrans tactiles, les verres de lunette, les lentilles d'un dispositif optique, les vitres d'un bâtiment, les fibres optiques.

L'invention propose ainsi un procédé de traitement antireflet durable dans le domaine visible d'un matériau en verre consiste en un bombardement par faisceau d'ions d'un gaz mono et multichargés produits par une source à résonance cyclotronique électronique (RCE) où :

- la température de traitement du matériau en verre est inférieure ou égale à la température de transition vitreuse;

- on choisit la dose d'ions d'un gaz mono et multichargés implantés par unité de surface dans une plage comprise entre $10^{12}$ ions/cm$^2$ et $10^{18}$ ions/cm$^2$ de manière à obtenir une concentration atomique en ions d'un gaz mono et multichargés telle que l'indice de réfraction n de la couche implantée est approximativement égale à $(n1*n2)^{1/2}$ où n1 est l'indice de l'air et n2 l'indice du verre;

- on choisit la tension d'accélération dans une plage comprise entre 5kV et 1000 kV de manière à obtenir une épaisseur implantée e égal à p*λ/4*n où e est l'épaisseur implantée correspondant à une zone d'implantation où la concentration atomique en ions d'un gaz mono et multichargés implantés est supérieure ou égale à 1%, où p est un nombre entier, λ la longueur d'onde incidente et n l'indice de la couche implantée.

Les inventeurs ont pu constater qu'un procédé de traitement antireflet durable dans le domaine visible comprenant un bombardement par faisceau d'ions d'un gaz mono et multichargés produits par une source à résonance cyclotronique électronique (RCE) est plus efficace qu'un procédé comprenant un bombardement par faisceau d'ions d'un gaz mono chargés.

Selon un mode de réalisation, le faisceau d'ions d'un gaz mono et multichargés comprend 10% d'ions multichargés ou plus de 10% d'ions multichargés ;

Selon un mode de réalisation, les ions d'un gaz mono et multichargés du faisceau d'ions sont sélectionnés parmi les ions des éléments de la liste des gaz dits « nobles », constituée de l'hélium (He), du néon (Ne), de l'argon (Ar), du krypton(Kr) et du Xénon (Xe);

Selon un autre mode de réalisation, les ions d'un gaz mono et multichargés du faisceau d'ions sont sélectionnés parmi les ions des gaz de la liste constituée de l'azote ($N_2$) et l'oxygène ($O_2$) .

On choisit la dose d'ions d'un gaz mono et multichargés implantés par unité de surface dans une plage comprise entre $10^{12}$ ions/cm$^2$ et $10^{18}$ ions/cm$^2$ de manière à obtenir une concentration atomique en ions d'un gaz mono et multichargés telle que l'indice de réfraction n de la couche implantée est approximativement égale à $(n1{*}n2)^{1/2}$ où n1 est l'indice de l'air et n2 l'indice du verre; on obtient une diminution de l'indice de réfraction de la couche implantée vers une valeur sensiblement égale à la racine carrée du produit des indices des milieux séparés par le dioptre. Ceci se traduit par la formule suivante : n = $(n1{*}n2)^{1/2}$ ou n1 est l'indice de l'air (n1 =1) et n2 l'indice du verre ; dans le cas d'un verre sodocalcique (n2 = 1,54), l'indice (n) de la couche implantée doit être sensiblement égal à 1,24.

D'après leurs calculs, les inventeurs estiment qu'il devrait exister une relation proportionnelle entre la concentration atomique en ions implantés et la diminution de l'indice optique observée. Cette relation serait alors approximativement la suivante :

$$N = n1{*}x1+n2{*}x2 \text{ avec } x1+x2 = 1$$

Avec x1 correspondant à la concentration atomique moyenne en silicium (qui représente une grande majorité des atomes constituant le verre) dans la couche implantée ;

Avec x2 correspondant à la concentration atomique moyenne des ions présents dans la couche implantée.

Cela revient également à écrire:

$$N = n1 + (n2-n1){*}x2 ;$$

Pour s'approcher d'un indice n = 1,24, il faudrait en se basant sur cette formule implanter environs 50% d'ions (x2 =0,5).

Les résultats expérimentaux des inventeurs démontrent que 5 fois moins d'ions sont nécessaires pour obtenir le résultat, soit environ une concentration atomique en ions de 10%.

Cela revient à écrire la formule empirique suivante:

$$N = n1 + (n2-n1){*}5{*}x2 ;$$

Sans trop s'avancer, cette différence entre théorie et expérience, pourrait s'expliquer par la création et l'agglomération de lacunes qui s'ajouteraient à la formation de nanocavités remplies de gaz, réduisant la densité du milieu et amplifiant de fait la diminution de l'indice de réfraction.

Selon un mode de réalisation, le procédé de l'invention préconise d'atteindre une concentration atomique maximale d'environ 10% en gaz pour obtenir un indice de réfraction (n) très proche de $(n1{*}n2)^{1/2}$.

On choisit donc la tension d'accélération des ions d'un gaz mono et multichargés dans une plage comprise 5 kV (kilovolts) et 1000 kV (kilovolts) de manière à obtenir une épaisseur implantée correspondant à un multiple entier de la longueur d'onde incidente divisée par 4 fois l'indice de réfraction de la couche implantée. Dans tout ce qui suit, on appelle épaisseur implantée la zone d'implantation où la concentration atomique en ions est supérieure ou égale à 1%.

Cela se traduit par la formule suivante :

$e = p*\lambda/4*n$ ou e est l'épaisseur implantée ou, p un nombre entier, $\lambda$ la longueur d'onde incidente et n l'indice de la couche implantée (égale à $(n1*n2)^{1/2}$).

Pour une onde monochromatique jaune qui est représentative du domaine visible (longueur d'onde égale à 560 nm), l'épaisseur implantée doit être approximativement égale à $p*(560/4*1,24)$ ou p est un nombre entier, autrement dit à $p*100$ nm. Pour p = 1, l'épaisseur implantée est égale à 100 nm, pour p = 2 l'épaisseur implantée est égale à 200 nm.

Le traitement préconisé par le procédé de l'invention se conduit à une réduction d'au moins 50% du coefficient de réflexion voire d'au moins 90% de l'onde incidente. En effet, en se plaçant dans les conditions du procédé de l'invention ou n1=1 (air) et n = $(n2)^{1/2}$ et en calculant le coefficient de réflexion minimal $R_m$ avec la formule suivante $R_m = (n^2-n2)^2/(n^2+n2)^2$, on peut s'attendre par ajustement des paramètres à ce que Rm tende plutôt vers la valeur idéale de 0, autrement dit aucune réflexion.

A titre comparatif, un dépôt de fluorure de magnésium (MgF2) a un indice de 1,35 (légèrement supérieur à 1,24). Un traitement anti-réfléchissant par dépôt de MgF2 abaisse le coefficient de réflexion de 4% à 1,2%, soit une réduction du coefficient de réflexion de 60%.

Selon un mode de réalisation, le matériau en verre est traité par des ions d'un gaz mono et multichargés dits « nobles » lourds appartenant à la liste des éléments constituée de l'hélium (He), du néon (Ne) de l'argon (Ar), du krypton (Kr), du xénon (Xe). Ce traitement a pour fonction de créer une zone où les ions d'un gaz mono et multichargés nobles ont pour effet de créer une diminution de la densité du verre. Cette couche est caractérisée par un indice de réfraction inférieur à celui du verre sain sous-jacent.

Le choix des ions d'un gaz mono et multichargés et des conditions de bombardement de ces ions d'un gaz mono et multichargés selon l'invention permet d'obtenir avantageusement une diminution de l'indice de réfraction du matériau en verre se traduisant par une réduction du coefficient de réflexion et une augmentation du coefficient de transmission. Ces propriétés sont très importantes pour augmenter par exemple les performances d'une cellule photovoltaïque, pour réduire les reflets sur un écran plat tactile.

Les inventeurs ont pu constater que les plages choisies selon l'invention de tension d'accélération et de dose d'ions d'un gaz mono et multichargés par unité de surface permettent de sélectionner des conditions expérimentales où la réduction des reflets (donc du coefficient de réflexion), est possible grâce à un bombardement ionique d'ions d'un gaz mono et multichargés.

En outre, ils ont pu constater que le procédé selon l'invention peut être mis en oeuvre « à froid », notamment à température ambiante et qu'il convient que la température du matériau en verre demeure inférieure ou égale à la valeur de transition du matériau en verre durant la mise en oeuvre du procédé. On peut ainsi éviter avantageusement que le matériau en verre subisse dans sa masse une modification cristallographique préjudiciable à ses propriétés mécaniques.

Le choix de la dose d'ions d'un gaz mono et multichargés par unité de surface dans la plage de dose selon l'invention peut résulter d'une étape préalable d'étalonnage où on bombarde avec un des ions d'un gaz mono et multichargés, par exemple parmi He, Ne, Ar, Kr, Xe, $N_2$, $O_2$, un échantillon constitué du matériau en verre envisagé. Le bombardement de ce matériau en verre peut s'effectuer dans différentes zones du matériau avec une pluralité de doses d'ions d'un gaz mono et multichargés, dans la plage selon l'invention. On observe ensuite les zones traitées de manière à choisir une dose adéquate en fonction de l'observation plus ou moins importante des reflets sur la surface traitée.

L'observation des zones traitées ainsi peut s'effectuer par des techniques d'observation simples, telles qu'une observation à l'oeil nu sous un angle d'incidence de 10° d'une lumière réfléchie (par exemple tube de néon) ou de techniques plus complexe comme l'interférométrie.

Sans vouloir être lié par une quelconque théorie scientifique, on peut penser que ce phénomène de réduction de l'indice de réfraction de l'épaisseur implantée peut s'expliquer par l'apparition de « nanocavités » remplies par les gaz implantés dont l'indice de réfraction est très proche de 1. En effet ces ions d'un gaz mono et multichargés sont inertes chimiquement et sont dissous dans le verre en deçà d'un certain seuil de concentration atomique (que l'on estime en deçà de 1%). Dès que ce seuil de concentration est dépassé, des nanocavités remplies de gaz se forment, contribuant à l'abaissement de l'indice de la couche implantée

Selon différents modes de réalisation, qui peuvent être combinés :

- la dose d'ions d'un gaz mono et multichargés par unité de surface est supérieure ou égale à $10^{15}$ ions/cm$^2$, par exemple supérieure ou égale à $10^{16}$ ions/cm$^2$;

- la tension d'accélération des ions d'un gaz mono et multichargés est comprise entre 5 kV et 200 kV ;

- le faisceau d'ions d'un gaz mono et multichargés comprend 10% d'ions multichargés ou plus de 10% d'ions multichargés ;

- la tension d'accélération est choisie pour obtenir une épaisseur implantée égale à p* 100 nm où p est un nombre entier ;

- la dose d'ions d'un gaz mono et multichargés implantés par unité de surface est choisie pour atteindre une concentration atomique en ions implantés égale à 10% avec une incertitude de (+/-) 5% ; selon un mode de réalisation, le choix de la dose d'ions d'un gaz mono et multichargés implantés par unité de surface et le choix de la tension d'accélération s'effectuent par un calcul effectué préalablement permettant d'évaluer la dose d'ions d'un gaz mono et multichargés implantés par unité de surface pour atteindre une concentration atomique en ions implantés égale à 10% avec une incertitude de (+/-) 5% à partir d'un profil d'implantation de l'ion choisi en fonction de la profondeur d'implantation ;

- le matériau en verre est mobile par rapport au faisceau d'ions d'un gaz mono et multichargés à une vitesse, $V_D$, comprise entre 0,1 mm/s et 1000 mm/s ; selon un mode de réalisation, une même zone du matériau en verre est déplacée sous le faisceau d'ions d'un gaz mono et multichargés selon une pluralité, N, de passages à la vitesse $V_D$.

Selon la présente invention, les ions d'un gaz mono et multichargés sont produits par une source à résonance cyclotronique électronique (RCE) qui a l'avantage d'être compacte et économe en énergie.

La présente invention vise également une pièce en verre comprenant au moins une surface avec un ion implanté selon le procédé de traitement, selon l'une quelconque des modes de réalisation ci-dessus, où la réflexion d'une onde incidente dans le domaine visible est réduite au moins de moitié.

La présente invention vise également l'utilisation du procédé de traitement, selon l'une quelconque des modes de réalisation ci-dessus, pour traiter une pièce massive en verre choisie parmi la liste constituée d'un écran tactile, d'un verre de lunette, d'une lentille d'un dispositif optique, d'une vitre d'un bâtiment, d'une fibre optique.

D'autres particularités et avantages de la présente invention ressortiront dans la description ci-après d'exemples de réalisation non limitatifs, illustrés par les figures annexées, où :

Les figures 1.a et 1.b décrivent la propagation d'une onde incidente sans et avec une couche antireflet ;

Les figures 2, 3, 5, 7, 9 représentent des profils d'implantation de différents ions en fonction de la profondeur d'implantation.

Les figures 4, 6, 8 représentent la variation du gain G (en %) mesuré après traitement en fonction de la dose d'ions pour une tension d'accélération donnée.

Selon des exemples de mise en oeuvre de la présente invention, des échantillons de matériau en verre sodocalciques ont fait l'objet d'études, avec des ions mono et multichargés Hélium pour certains échantillons, avec des ions mono et multichargés Argon pour d'autres échantillons, avec des ions mono et multichargés d'azote $N_2$ pour d'autres échantillons encore.

Ces ions d'un gaz mono et multichargés ont été émis par une source RCE.

La famille des verres sodocalciques (« Soda-lime glass » pour les anglophones) regroupe des verres à base de silice $SiO_2$, de calcium et de sodium introduits en général à la fabrication sous forme de CaO et $Na_2O$. Ces verres sont les plus répandus ; ils sont utilisés pour la fabrication de bouteilles, de flacons et de vitrages, et représentent de l'ordre de 90% de la production de verre.

Les inventeurs ont mené une première série d'essais avec :

- Un faisceau d'ions mono et multichargés Helium d'une intensité de 1 mA comprenant des ions $He^+$ et $He^{2+}$ ; la tension d'accélération est de 35 kV ; l'énergie de He+ est de 35 keV et celle de $He^{2+}$ de 70 keV. Les doses de traitement sont égales à $10^{16}$, $5 \times 10^{16}$ et $10^{17}$ ions/cm$^2$.
- Un faisceau d'ions mono et multichargés d'argon d'une intensité de 1 mA comprend des ions $Ar^+$, $Ar^{2+}$, $Ar^{3+}$ ; la tension d'accélération est de 35 kV ; l'énergie de $Ar^+$ est de 35 keV, celle de $Ar^{2+}$ de 70 keV, celle de $Ar^{3+}$ de 105 keV. Les doses de traitement sont égales à $10^{16}$, $3 \times 10^{16}$ et $6 \times 10^{16}$ ions/cm$^2$.

Les échantillons traités se déplacent par rapport au faisceau avec une vitesse de déplacement à 120 mm/s et avec un pas d'avancement latéral à chaque retour de 4 mm (10% du diamètre faisceau qui mesure 40 mm). Pour atteindre la dose nécessaire le traitement se fait en plusieurs passes.

Les propriétés antireflet de la surface des échantillons, peuvent être appréciées qualitativement à l'oeil nu en observant le reflet d'une image sur une surface en verre ou encore quantitativement grâce à la mise en oeuvre d'un procédé de mesure interférométrique: on projette par exemple une lumière monochromatique de 560 nm au travers d'une lame mince en verre traitée sur deux faces, sous un angle d'incidence donné et on analyse l'image obtenue sous la forme d'une série d'anneaux emboîtés dans le plan focal d'une lentille. On peut déduire le coefficient de réflexion des dioptres de la lame en mesurant la finesse des anneaux brillants (à mi-hauteur de l'intensité maximale).

Les inventeurs ont effectués des essais qualitatifs en observant à l'oeil nu la réflexion de la lumière d'un tube néon, sur une surface traitée légèrement inclinée pour différentes doses. L'image réfléchie de ce tube néon à été observée sous un angle d'environ 10°. De ces essais qualitatifs, il ressort que la réflexion du néon en terme de contraste plus faible apparaît autour d'une dose de 3x$10^{16}$ ions/cm2 pour l'argon et de $10^{17}$ ions/cm2 pour l'hélium.

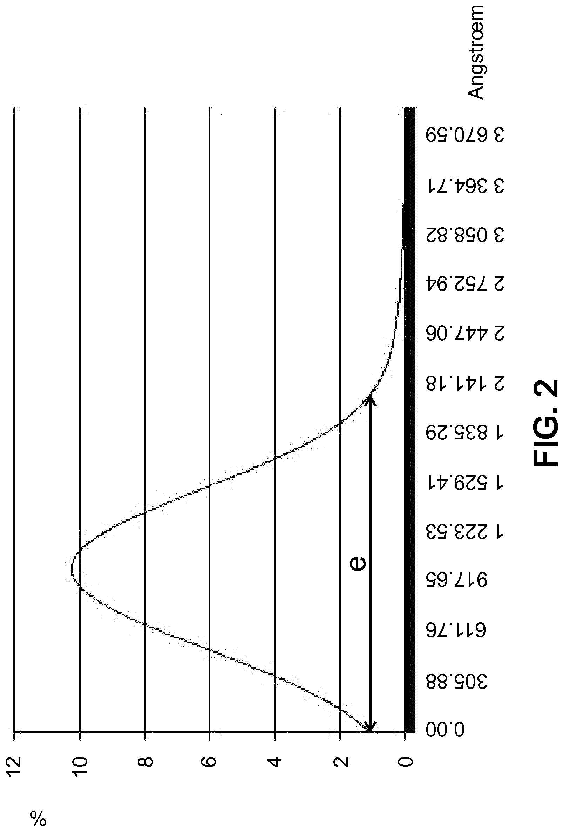

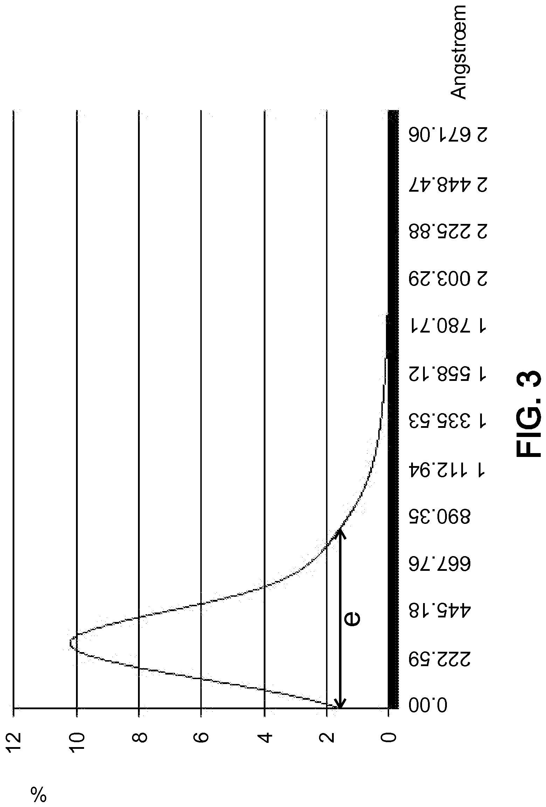

Une étude menée sur un simulateur d'implantation d'ions multichargés s'appuyant sur des données semi-empiriques développé par les inventeurs donne, dans les conditions de traitement précitées, les résultats suivants consignés dans le tableau 1 pour l'hélium (voir le profil d'implantation de la figure 2) et le tableau 2 pour l'argon (voir le profil d'implantation de la figure 3).

Tableau 1

| Dose ($10^{16}$ ions He/cm2) | Effet antireflet observable | Concentration atomique He (%) | Epaisseur couche implantée |
|---|---|---|---|
| 1 | non | 1% | 200 nm |
| 5 | non | 5% | 200 nm |
| 10 | oui | 11% | 200 nm |

Tableau 2

| Dose ($10^{16}$ ions Ar/cm2) | Effet antireflet observable | Concentration atomique Ar (%) | Epaisseur implantée |
|---|---|---|---|
| 1 | non | 2,5% | 112 nm |
| 3 | oui | 12,5% | 112 nm |
| 6 | non | 21% | 112 nm |

Comme le préconise le procédé de l'invention, le réglage de la tension d'accélération des ions est calculé de manière à régler l'épaisseur implantée sur un multiple de 100 nm environ. On peut régler plus finement ces valeurs extrapolées (tension d'accélération, dose) lors d'une phase d'ajustement expérimental utilisant des moyens interférométriques précis permettant d'évaluer la réduction optimale du coefficient de réflexion (voir méthode citée plus haut).

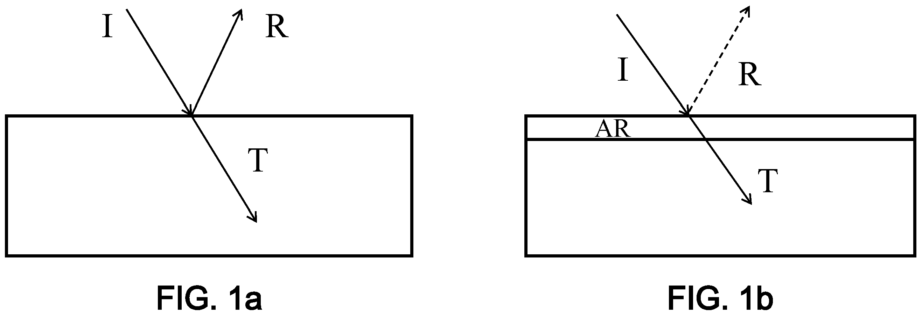

La figure 1.a décrit comment une onde incidente (I) se sépare lors du passage dans le dioptre en une onde transmise (T) et une onde fortement réfléchie (R) en trait plein. La figure 1.b décrit comment une couche antireflet(AR) créée par le procédé de l'invention renvoie faiblement l'onde réfléchie (R) en pointillé.

La figure 2 représente le profil d'implantation d'ions Hélium correspondant à une dose de $10^{17}$ ions/cm2, obtenue avec un faisceau d'ions He$^+$, He$^{2+}$ une tension d'accélération de 35 kV. La distribution des ions He+/He2+ est 90%/10%. En abscisse on trouve la profondeur d'implantation exprimée en angstroem, en ordonnée on trouve la concentration atomique en ions hélium implantés exprimée en %. La concentration atomique en ions hélium atteint environ 10% (+/-5%) sur une épaisseur implantée d'environ 200 nm (soit 2 fois 100 nm). L'épaisseur implantée correspond à la zone où la concentration atomique en ions hélium implantés est supérieure ou égale à 1%. Comme le confirme l'expérience, ces caractéristiques confèrent à la couche implantée des propriétés antireflet.

La figure 3 représente le profil d'implantation d'ions Argon correspondant à une dose de 3*$10^{16}$ ions/cm2, obtenue avec un faisceau d'ions Ar$^+$, Ar$^{2+}$, Ar$^{3+}$, une tension d'accélération de 35 kV. La distribution des ions Ar$^+$/Ar$^{2+}$/Ar$^{3+}$ est 60%/30%/10%. En abscisse on trouve la profondeur d'implantation exprimée en angstroem, en ordonnée on trouve la concentration atomique en ions argon implantés exprimée en %. La concentration atomique en ions argon atteint environ 10% (+/-5%) sur une épaisseur implantée d'environ 100 nm (soit 1 fois 100 nm). L'épaisseur implantée e correspond à la zone ou la concentration atomique en ions argon implantés est supérieure ou égale à 1%. Comme le confirme l'expérience, ces caractéristiques confèrent à la couche implantée des caractéristiques antireflet.

Par ailleurs, une seconde série d'essais a été entrepris afin d'évaluer le traitement antireflet avec des moyens de caractérisation pour quantifier avec une plus grande précision le gain de transmission de la lumière G (en %) obtenu après traitement au travers d'un dioptre en verre appartenant à la famille des sodocalcique. Par définition, on appelle G le gain exprimé en % correspondant à l'augmentation du coefficient de transmission de la lumière obtenu après traitement (autrement dit la différence entre le coefficient de transmission après et avant traitement).

Deux types d'ions ont été mis en oeuvre : l'azote ($N_2$) et l'Argon (Ar).

Pour l'azote, deux profondeurs de traitement ont été étudiés en réglant la tension d'accélération à 20 et 35 kV.

Pour l'Argon, une seule tension d'accélération de 35 kV a été mise oeuvre. Plusieurs doses ont été mises en oeuvre pour chaque type d'ion à différentes tensions d'accélérations. Les résultats sont consignés dans les tableaux suivants :

Pour l'azote($N_2$) à 20 kV :

| Doses ($10^{17}$ ions/cm2) | gain G (%) |
|---|---|
| **0** | **0** |
| 0,01 | 0,4 |
| 0,05 | 0,6 |
| 0,1 | 0,5 |
| 0,5 | 2,3 |
| 1 | 2,3 |

Pour l'azote($N_2$) à 35 kV :

| Doses ($10^{17}$ ions/cm2) | gain G(%) |
|---|---|
| 0 | 0 |
| 0,05 | 0,5 |
| 0,1 | 0,6 |
| 0,3 | 0,7 |
| 0,6 | 1,4 |
| 0,75 | 1,7 |
| 1 | -0,4 |
| 2,5 | 1,2 |
| 5 | 0,2 |

Pour l'argon(Ar) à 35 kV :

| Doses ($10^{17}$ ions/cm2) | gain G (%) |
|---|---|
| 0 | 0 |
| 0,75 | 1,9 |
| 1 | 2,1 |
| 2,5 | 2,4 |

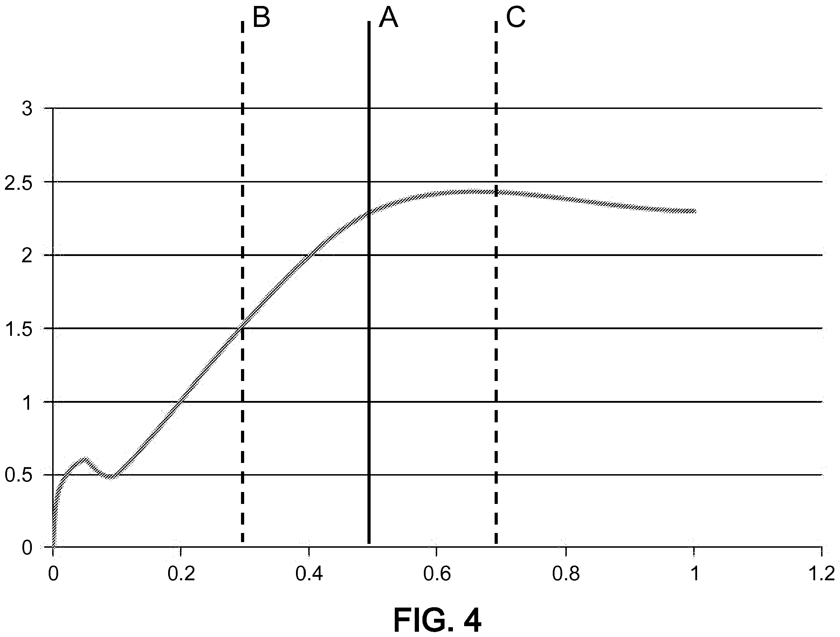

La figure 4 représente sur l'axe des ordonnées le gain G (en %) mesuré après traitement avec de l'azote ($N_2$) à 20 kV et selon différentes doses représentées sur l'axe des abscisses et exprimées en $10^{17}$ ions/cm2. Une dose de $0,4 \times 10^{17}$ ions/cm2 semble particulièrement indiquée pour réduire de moitié le coefficient de réflexion de la lumière qui passe de 4% à 2% tandis que le coefficient de transmission de la lumière qui augmente de 2%, passe de 96% à 98%. La ligne référencée A correspond à la dose pour laquelle la concentration atomique en ions implantés est égale à 10%, les lignes référencées B et C correspondent respectivement aux doses pour lesquelles la concentration atomique en ions implantés est égale à 5% et 15%. Le seuil de saturation de la courbe correspondant à un gain maximum en transmission lumineuse qui est situé sur la ligne A. La ligne B et C encadre ce seuil.

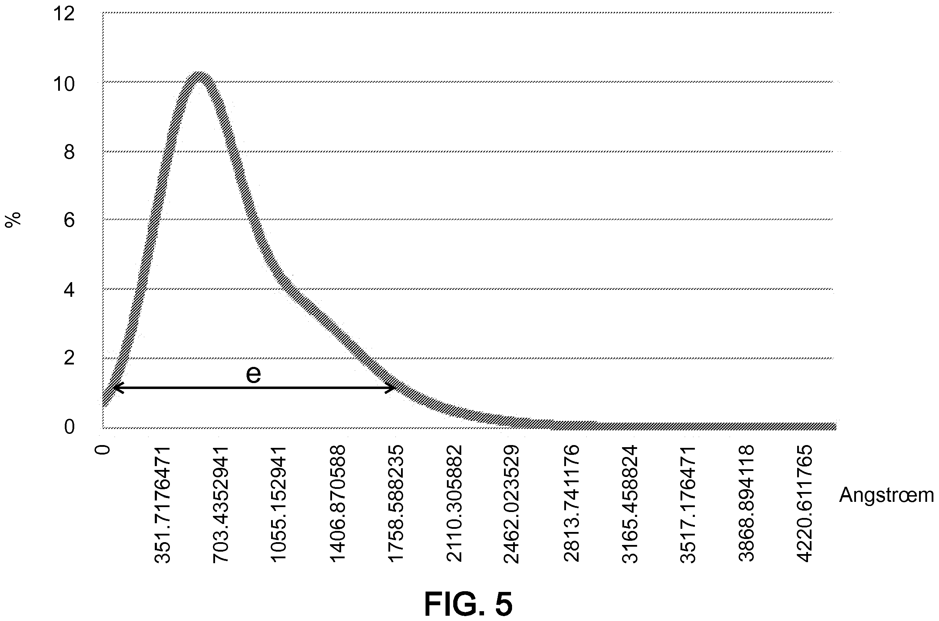

La figure 5 représente le profil d'implantation simulé avec des ions azote correspondant à une dose de $0,5*10^{17}$ ions/cm2, obtenue avec un faisceau d'ions $N^+$, $N^{2+}$, $N^{3+}$, une tension d'accélération de 20 kV. La distribution des ions $N^+/N^{2+}/N^{3+}$ est estimée égale à 58%/31%/11%. En abscisse on trouve la profondeur d'implantation exprimée en angstroem, en ordonnée on trouve la concentration atomique en ions azote implantés exprimée en %. La concentration atomique en ions azote atteint environ 10% sur une épaisseur implantée d'environ 200 nm (soit 2 fois 100 nm). L'épaisseur implantée e correspond à la zone ou la concentration atomique en ions azote implantés est supérieure ou égale à 1%. L'expérience prouve que ces caractéristiques de traitement en concentration maximal d'ions implantés et en profondeur de traitement, confèrent à la couche implantée avec des ions azote des caractéristiques antireflets.

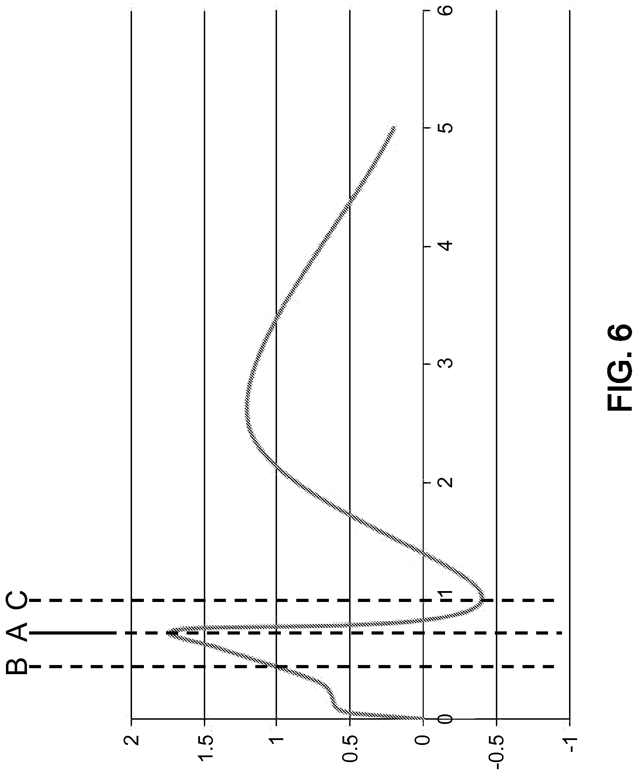

La figure 6 représente sur l'axe des ordonnées le gain G (en %) mesuré après traitement avec de l'azote ($N_2$) à 35 kV et selon différentes doses représentées sur l'axe des abscisses et exprimées en $10^{17}$ ions/cm2. Là aussi, une dose de $0,75x10^{17}$ ions/cm2 semble particulièrement indiquée pour réduire presque de moitié le coefficient de réflexion de la lumière qui passe de 4% à 2,3% tandis que le coefficient de transmission de la lumière qui augmente de 1,7%, passe de 96% à 97,7%. La ligne référencée A correspond à la dose pour laquelle la concentration atomique en ions implantés est égale à 10%, les lignes référencées B et C correspondent respectivement aux doses pour lesquelles la concentration atomique en ions implantés est égale à 5% et 15%. Le pic de la courbe correspondant au gain maximum en transmission lumineuse est situé sur la ligne A. La ligne B et C encadre ce pic.

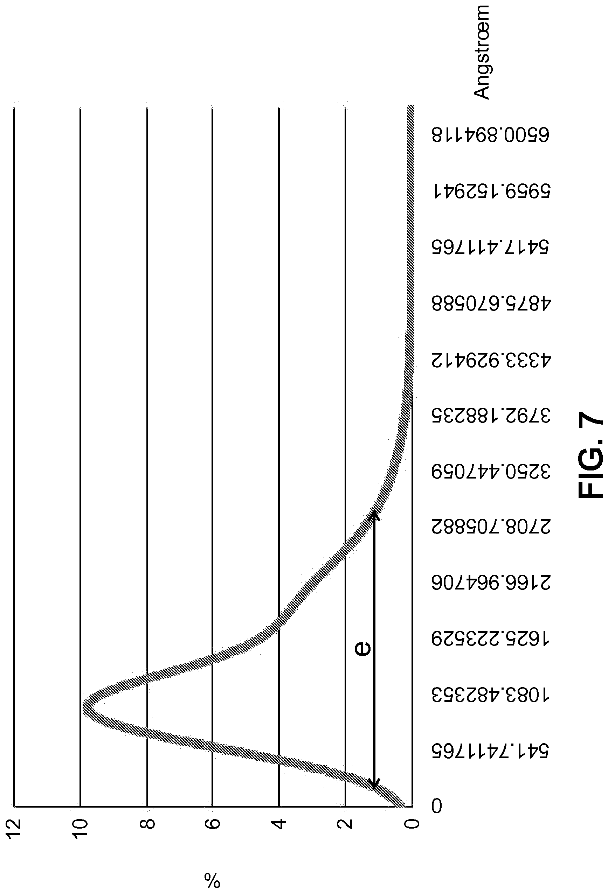

La figure 7 représente le profil d'implantation simulé avec des ions azote correspondant à une dose de $0,75*10^{17}$ ions/cm2, obtenue avec un faisceau d'ions $N^+$, $N^{2+}$, $N^{3+}$, une tension d'accélération de 35 kV. La distribution des ions $N^+/N^{2+}/N^{3+}$ est estimée égale à 58%/31%/11%. En abscisse on trouve la profondeur d'implantation exprimée en angstroem, en ordonnée on trouve la concentration atomique en ions azote implantés exprimée en %. La concentration atomique en ions azote atteint environ 10% sur une épaisseur implantée d'environs 300 nm (soit 3 fois 100 nm). L'épaisseur implantée e correspond à la zone ou la concentration atomique en ions azote implantés est supérieure ou égale à 1%. L'expérience prouve que ces caractéristiques de traitement en concentration maximal d'ions implantés et en profondeur de traitement, confèrent à la couche implantée avec des ions azote des caractéristiques antireflets.

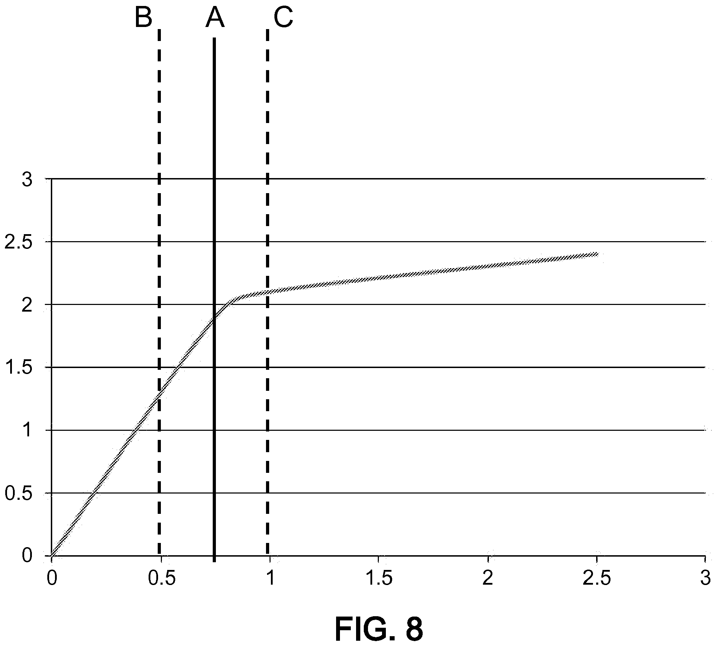

La figure 8 représente sur l'axe des ordonnées le gain G (en %) mesuré après traitement avec de l'argon (Ar) à 35 kV et selon différentes doses représentées sur l'axe des abscisses et exprimées en $10^{17}$ ions/cm2. Une dose de $0,75x10^{17}$ ions/cm2, voire moins, semble particulièrement indiquée pour réduire presque de moitié le coefficient de réflexion de la lumière qui passe de 4% à 2,1% tandis que le coefficient de transmission de la lumière qui augmente de 1,9%, passe de 96% à 97,9%. La ligne référencée A correspond à la dose pour laquelle la concentration atomique en ions implantés est égale à 15%, les lignes référencées B et C correspondent respectivement aux doses pour lesquelles la concentration atomique en ions implantés est égale à 10% et 20%. Le seuil de saturation correspondant à un gain maximum en transmission lumineuse est situé plutôt sur une ligne A ou la concentration est de 15%, légèrement supérieur à celle attendue de 10%. On remarquera toutefois que la courbe est le produit d'une extrapolation avec un nombre finis de résultats acquis avec des doses supérieures ou égale $0,5x10^{17}$ cm2. Il faudrait compléter et affiner cette extrapolation avec résultats acquis avec des doses plus faibles situées en deca de $0,75x10^{17}$ ions/cm2 (par exemple 0,1, 0,2 et $0,5x10^{17}$ ions/cm2. Il est fort probable que l'on constate à cette occasion, un report du seuil de saturation dans une zone de doses plus faibles située approximativement autour de $0,5X10^{17}$ ions/cm2 correspondant à une concentration atomique d'ions implantées située autour de 10%, ce qui serait plus conforme aux prédictions.

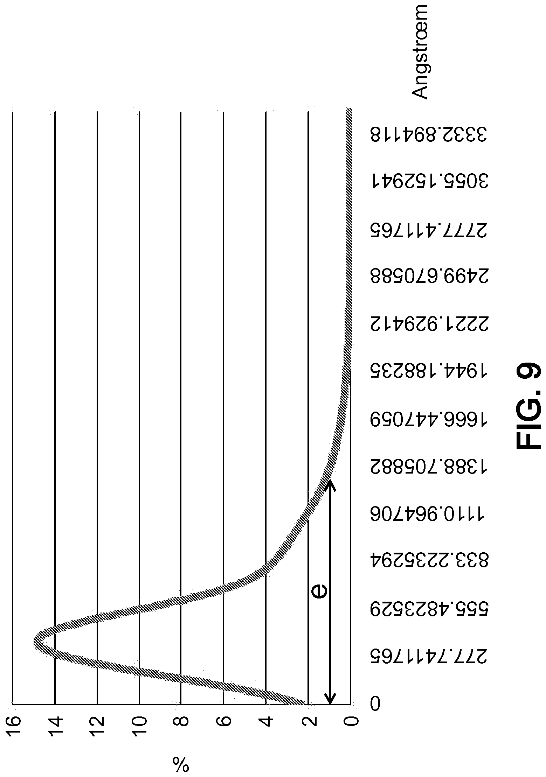

La figure 9 représente le profil d'implantation simulé avec des ions argon correspondant à une dose de $0,75*10^{17}$ ions/cm2, obtenue avec un faisceau d'ions $Ar^+$, $Ar^{2+}$, $Ar^{3+}$, une tension d'accélération de 35 kV. La distribution des ions $Ar^+/Ar^{2+}/Ar^{3+}$ est estimée égale à 66%/24%/10%. En abscisse on trouve la profondeur d'implantation exprimée en angstroem, en ordonnée on trouve la concentration atomique en ions argon implantés exprimée en %. La concentration atomique en ions argon atteint environ 15% sur une épaisseur implantée d'environs 100 nm (soit 1 fois 100 nm). L'épaisseur implantée e correspond à la zone ou la concentration atomique en ions azote implantés est supérieure ou égale à 1%. L'expérience prouve que ces caractéristiques de traitement en concentration atomique maximale d'ions implantés et en profondeur de traitement, confèrent à la couche implantée avec des ions argon des caractéristiques antireflets.

De cette campagne de traitement, il ressort que l'azote permet d'obtenir des propriétés antireflet comparables à celles obtenues avec des ions nobles comme l'hélium ou l'argon. Sans trop s'avancer, cela pourrait éventuellement s'expliquer comme pour les gaz nobles, par la formation de nano-cavités remplis de molécule d'azote $N_2$. Des études préliminaires montrent que l'on obtienne les mêmes effets avec un autre gaz diatomique comme l'oxygène (O2).

**Revendications**

**1.** Procédé de traitement antireflet durable dans le domaine visible d'un matériau en verre **caractérisé en ce qu'**il consiste en un bombardement par faisceau d'ions d'un gaz, mono et multichargés, produits par une source à résonance cyclotronique électronique (RCE) où :

- la température de traitement du matériau en verre est inférieure ou égale à la température de transition vitreuse;
- on choisit la dose d'ions d'un gaz mono et multichargés implantés par unité de surface dans une plage comprise entre $10^{12}$ ions/cm$^2$ et $10^{18}$ ions/cm$^2$ de manière à obtenir une concentration atomique en ions d'un gaz mono et multichargés telle que l'indice de réfraction n de la couche implantée est approximativement égale à $(n1*n2)^{1/2}$ où n1 est l'indice de l'air et n2 l'indice du verre;
- on choisit la tension d'accélération dans une plage comprise entre 5kV et 1000 kV de manière à obtenir une épaisseur implantée e égal à $p*\lambda/4*n$ où e est l'épaisseur implantée correspondant à une zone d'implantation où la concentration atomique en ions d'un gaz mono et multichargés implantés est supérieure ou égale à 1%, où p est un nombre entier, $\lambda$ la longueur d'onde incidente et n l'indice de la couche implantée.

2. Procédé selon la revendication 1 **caractérisé en ce que** les ions d'un gaz mono et multichargés du faisceau d'ions sont sélectionnés parmi les ions des éléments de la liste constituée de l'hélium (He), du néon (Ne), de l'argon (Ar), du Krypton (Kr), du Xénon (Xe).

3. Procédé selon la revendication 1 **caractérisé en ce que** les ions d'un gaz mono et multichargés du faisceau d'ions sont sélectionnés parmi les ions des gaz de la liste constituée de l'azote ($N_2$) et l'oxygène ($O_2$) .

4. Procédé selon l'une quelconque des revendications précédentes **caractérisé en ce que** le faisceau d'ions d'un gaz mono et multichargés comprend 10% d'ions multichargés ou plus de 10% d'ions multichargés.

5. Procédé selon l'une quelconque des revendications précédentes **caractérisé en ce que** la tension d'accélération est choisie pour obtenir une épaisseur implantée égale à p* 100 nm où p est un nombre entier.

6. Procédé selon l'une quelconque des revendications précédentes **caractérisé en ce que** la dose d'ions d'un gaz mono et multichargés implantés par unité de surface est choisie pour atteindre une concentration atomique en ions implantés égale à 10% avec une incertitude de (+/-) 5%.

7. Procédé selon la revendication précédente **caractérisé en ce que** le choix de la dose d'ions d'un gaz mono et multichargés implantés par unité de surface et le choix de la tension d'accélération s'effectuent par un calcul effectué préalablement permettant d'évaluer la dose d'ions d'un gaz mono et multichargés implantés par unité de surface pour atteindre une concentration atomique en ions implantés égale à 10% avec une incertitude de (+/-) 5% à partir d'un profil d'implantation de l'ion choisi en fonction de la profondeur d'implantation.

8. Procédé selon l'une quelconque des revendications précédentes **caractérisé en ce que** le matériau en verre est mobile par rapport au faisceau d'ions d'un gaz mono et multichargés à une vitesse, $V_D$, comprise entre 0,1 mm/s et 1000 mm/s.

9. Procédé selon la revendication précédente **caractérisé en ce qu'**une même zone du matériau en verre est déplacée sous le faisceau d'ions d'un gaz mono et multichargés selon une pluralité, N, de passages à la vitesse $V_D$.

10. Procédé selon l'une quelconque des revendications précédentes **caractérisé en ce que** le matériau en verre est choisi parmi la liste des verres sodocalciques.

11. Utilisation du procédé de traitement selon l'une quelconque des revendications 1 à 10 pour traiter une pièce massive en verre choisie parmi la liste constituée d'un écran tactile, d'un verre de lunette, d'une lentille d'un dispositif optique, d'une vitre d'un bâtiment, d'une fibre optique.

**Patentansprüche**

1. Verfahren zur Behandlung eines Glasmaterials zum Zwecke eines dauerhaften Reflexionsschutzes im sichtbaren Bereich, **dadurch gekennzeichnet, dass** es Beschießen mit einem Strahl einfach und mehrfach geladener Ionen eines Gases, die von einer Elektron-Zyklotronresonanz- (EZR-) Quelle erzeugt werden, aufweist, wobei:

- die Behandlungstemperatur des Glasmaterials niedriger oder gleich der Glasübergangstemperatur ist;
- die Dosis der pro Flächeneinheit implantierten einfach und mehrfach geladenen Gasionen in einem Bereich zwischen $10^{12}$ Ionen/cm$^2$ und $10^{18}$ Ionen/cm$^2$ gewählt wird, um eine atomare Konzentration an einfach und mehrfach geladenen Gasionen zu erhalten, so dass der Brechungsindex n der Implantationsschicht ungefähr gleich (n1*n2)$^{1/2}$ ist, wobei n1 der Index der Luft und n2 der Index des Glases ist;
- die Beschleunigungsspannung in einem Bereich zwischen 5 kV und 1000 kV gewählt wird, um eine Implantationsdicke e zu bekommen, die gleich p*λ/4*n ist, wobei e die Implantationsdicke ist, die einer Implantationszone entspricht, in der die atomare Konzentration an implantierten einfach und mehrfach geladenen Gasionen größer oder gleich 1% ist, wobei p eine ganze Zahl, λ die einfallende Wellenlänge und n der Index der Implantationsschicht ist.

2. Verfahren nach Anspruch 1, **dadurch gekennzeichnet, dass** die einfach und mehrfach geladenen Gasionen des Ionenstrahls aus den Ionen der Elemente der folgenden Liste ausgewählt sind: Helium (He), Neon (Ne), Argon (Ar), Krypton (Kr), Xenon (Xe).

3. Verfahren nach Anspruch 1, **dadurch gekennzeichnet, dass** die einfach und mehrfach geladenen Gasionen des Ionenstrahls aus den Ionen der Gase der folgenden Liste ausgewählt sind: Stickstoff ($N_2$) und Sauerstoff ($O_2$).

4. Verfahren nach einem der vorstehenden Ansprüche, **dadurch gekennzeichnet, dass** der Strahl einfach und mehrfach geladener Gasionen 10% mehrfach geladene Ionen oder mehr als 10% mehrfach geladene Ionen aufweist.

5. Verfahren nach einem der vorstehenden Ansprüche, **dadurch gekennzeichnet, dass** die Beschleunigungsspannung gewählt wird, um eine Implantationsdicke zu bekommen, die gleich p* 100 nm ist, wobei p eine ganze Zahl ist.

6. Verfahren nach einem der vorstehenden Ansprüche, **dadurch gekennzeichnet, dass** die Dosis der pro Flächeneinheit implantierten einfach und mehrfach geladenen Gasionen gewählt wird, um eine atomare Konzentration an implantierten Ionen zu erreichen, die gleich 10% ist, mit einer Ungenauigkeit von (+/-) 5%.

7. Verfahren nach dem vorstehenden Anspruch, **dadurch gekennzeichnet, dass** die Wahl der Dosis der pro Flächeneinheit implantierten einfach und mehrfach geladenen Gasionen und die Wahl der Beschleunigungsspannung durch eine vorab durchgeführte Berechnung erfolgen, was erlaubt, die Dosis der pro Flächeneinheit implantierten einfach und mehrfach geladenen Gasionen zu bestimmen, um eine atomare Konzentration an implantierten Ionen zu erreichen, die gleich 10% ist, mit einer Ungenauigkeit von (+/-) 5%, ausgehend von einem Implantationsprofil des gewählten Ions als Funktion der Implantationstiefe.

8. Verfahren nach einem der vorstehenden Ansprüche, **dadurch gekennzeichnet, dass** das Glasmaterial mit einer Geschwindigkeit, $V_D$, die zwischen 0,1mm /s und 1000 mm/s beträgt, bezüglich des Strahls einfach und mehrfach geladener Gasionen mobil ist.

9. Verfahren nach dem vorstehenden Anspruch, **dadurch gekennzeichnet, dass** eine gleiche Zone des Glasmaterials unterhalb des Strahls einfach und mehrfach geladener Gasionen gemäß einer Vielzahl, N, von Durchgängen mit der Geschwindigkeit $V_D$ verschoben wird.

10. Verfahren nach einem der vorstehenden Ansprüche, **dadurch gekennzeichnet, dass** das Glasmaterial aus der Liste der Natrium-Kalk-Gläser ausgewählt ist.

11. Verwendung des Behandlungsverfahrens nach einem der Ansprüche 1 bis 10 zur Behandlung eines massiven Glasstücks, das aus der folgenden Liste ausgewählt ist: ein Berührungsbildschirm, ein Brillenglas, eine Linse einer optischen Vorrichtung, eine Fensterscheibe eines Gebäudes, eine optische Faser.

**Claims**

1. A process for durable antireflective treatment in the visible region of a glass material, **characterized in that** it consists of a bombardment by a beam of mono- and multicharged ions of a gas, which are produced by an electron cyclotron resonance (ECR) source where:

- the temperature for treatment of the glass material is less than or equal to the glass transition temperature;
- the dose of mono- and multicharged ions of a gas which are implanted per unit of surface area is chosen within a range of between $10^{12}$ ions/cm$^2$ and $10^{18}$ ions/cm$^2$ so as to obtain an atomic concentration of mono- and multicharged ions of a gas such that the refractive index n of the implanted layer is approximately equal to (n1*n2)$^{1/2}$, where n1 is the index of the air and n2 is the index of the glass;

- the acceleration voltage is chosen within a range of between 5 kV and 1000 kV so as to obtain an implanted thickness t equal to $p*\lambda/4*n$, where t is the implanted thickness corresponding to a region of implantation where the atomic concentration of implanted mono- and multicharged ions of a gas is greater than or equal to 1%, p is an integer, $\lambda$ is the incident wavelength and n is the index of the implanted layer.

2. The process as claimed in claim 1, **characterized in that** the mono- and multicharged ions of a gas of the ion beam are selected from the ions of the elements of the list consisting of helium (He), neon (Ne), argon (Ar), krypton (Kr), xenon (Xe).

3. The process as claimed in claim 1, **characterized in that** the mono- and multicharged ions of a gas of the ion beam are selected from the ions of the gases of the list consisting of nitrogen ($N_2$) and oxygen ($O_2$).

4. The process as claimed in any one of the preceding claims, **characterized in that** the beam of mono- and multicharged ions of a gas comprises 10% of multicharged ions or more than 10% of multicharged ions.

5. The process as claimed in any one of the preceding claims, **characterized in that** the acceleration voltage is chosen in order to obtain an implanted thickness equal to $p*100$ nm, where p is an integer.

6. The process as claimed in any one of the preceding claims, **characterized in that** the dose of implanted mono- and multicharged ions of a gas per unit of surface area is chosen in order to achieve an atomic concentration of implanted ions equal to 10% with an uncertainty of (+/-) 5%.

7. The process as claimed in the preceding claim, **characterized in that** the choice of the dose of implanted mono- and multicharged ions of a gas per unit of surface area and the choice of the acceleration voltage are made by a calculation, carried out beforehand, which makes it possible to evaluate the dose of implanted mono- and multicharged ions of a gas per unit of surface area in order to achieve an atomic concentration of implanted ions equal to 10% with an uncertainty of (+/-) 5% starting from an implantation profile of the chosen ion as a function of the implantation depth.

8. The process as claimed in any one of the preceding claims, **characterized in that** the glass material is movable with respect to the beam of mono- and multicharged ions of a gas at a speed, $V_D$, of between 0.1 mm/s and 1000 mm/s.

9. The process as claimed in the preceding claim, **characterized in that** one and same region of the glass material is moved under the beam of mono- and multicharged ions of a gas according to a plurality, N, of passes at the speed $V_D$.

10. The process as claimed in any one of the preceding claims, **characterized in that** the glass material is chosen from the list of the soda-lime glasses.

11. The use of the treatment process as claimed in any one of claims 1 to 10 to treat a bulk glass part chosen from the list consisting of a touch screen, a spectacle lens, a lens of an optical device, a window of a building and an optical fiber.

FIG. 1b

FIG. 1a

FIG. 2

FIG. 3

FIG. 4

FIG. 5

FIG. 6

EP 2 956 423 B1

FIG. 7

**FIG. 8**

FIG. 9

**EP 2 956 423 B1**

## RÉFÉRENCES CITÉES DANS LA DESCRIPTION

**Documents brevets cités dans la description**

- US 5250098 A